# EUROPÄISCHE PATENTSCHRIFT

(11) **EP 1 828 596 B1**
(45) Veröffentlichungstag und Bekanntmachung des Hinweises auf die Patenterteilung: **23.09.2009**
(21) Anmeldenummer: 05813550.0
(22) Anmeldetag: 30.11.2005
(51) Int. Cl.: F03B 11/02, F03B 1/00

(54) **PELTONTURBINE MIT EINEM WASSERABFUHRSYSTEM**
PELTON TURBINE WITH A WATER DRAIN SYSTEM
TURBINE PELTON AVEC SYSTEME D'EVACUATION D'EAU

(30) Priorität: 17.12.2004 DE 202004019537 U
(43) Veröffentlichungstag der Anmeldung: 05.09.2007
(60) Teilanmeldung: 08021176.6
(73) Patentinhaber: Erlach Consult Jec, 88213 Ravensburg (DE)
(72) Erfinder: ERLACH, Josef, 88213 Ravensburg (DE)
(74) Vertreter: Manitz, Gerhart
(86) Internationale Anmeldenummer: PCT/EP2005/012783
(87) Internationale Veröffentlichungsnummer: WO 2006/066691

(56) Entgegenhaltungen:
- AT-B- 366 476
- CH-A- 100 772
- FR-A- 2 247 920
- US-A- 1 448 893
- US-A- 1 579 146
- US-A- 4 950 130
- PATENT ABSTRACTS OF JAPAN Bd. 016, Nr. 480 (M-1321), 6. Oktober 1992 (1992-10-06) -& JP 04 175468 A (FUJI ELECTRIC CO LTD), 23. Juni 1992 (1992-06-23)
- PATENT ABSTRACTS OF JAPAN Bd. 1998, Nr. 11, 30. September 1998 (1998-09-30) -& JP 10 176648 A (FUJI ELECTRIC CO LTD), 30. Juni 1998 (1998-06-30)
- PATENT ABSTRACTS OF JAPAN Bd. 008, Nr. 140 (M-305), 29. Juni 1984 (1984-06-29) -& JP 59 037274 A (HITACHI SEISAKUSHO KK), 29. Februar 1984 (1984-02-29)

## Beschreibung

Die Erfindung betrifft eine Peltonturbine mit einem Wasserabfuhrsystem für Leistungen von mehr als 100 kW, wobei innerhalb eines Gehäuses ein Laufrad Doppelbecher mit einer Becherbreite "b" und mit einer Becherlänge "1" aufweist, in welche Doppelbecher Düsen, die in einer Symmetrie-Ebene der umlaufenden Becher angeordnet sind, tangential auf einem Freistrahldurchmesser "D1" jeweils einen Freistrahl einspritzen und wobei aus den Bechern austretendes Spritzwasser eingeschlossen durch Gehäusewände in einen Unterwasserkanal fällt, wobei innerhalb des Gehäuses an den Wurzeln der Becher ansetzend und über den vollständigen Umfang des Laufrades Führungsmittel in Form eines inneren Gehäuserings angeordnet sind, die Spritzwasser führen und umlenken.

Bei einer Peltonturbine wird das gesamte Nutzgefälle in der Düse in Geschwindigkeitsenergie umgesetzt. Die Schaufeln der Doppelbecher sind so geformt, dass der Freistrahl von einer Mittelschneide in gleiche Teile geschnitten und im Becher um nahezu 180° umgelenkt wird. Durch die Umlenkung wird fast die gesamte kinetische Energie des Wasserstrahles in Impulskraft am Radumfang umgesetzt. Die verbleibende Restenergie von etwa 2 bis 4 % ist noch als Geschwindigkeitsenergie vorhanden, um die Becher gut und schnell zu entleeren und geht größtenteils in etwa Achsrichtung aufgefächert beiderseits des Laufrades in das Turbinengehäuse bzw. auf die freie Oberfläche des Unterwasserkanals.

Die eine Peltonturbine der eingangs angegebenen Art beschreibende Patentschrift US 1,448,893 offenbart Doppelbecher, welche fertigungstechnisch den Vorteil haben, dass sie wegen der nach Außen fehlenden radialen Seitenwand einfach herstellbar sind. Gleichzeitig entsteht aber der Nachteil, dass mit dem Fehlen dieser äußeren Seitenwand an den Bechern in diesem Bereich keine Kräfte durch Umlenken von Strömung an das Laufrad abgegeben werden. Aus diesem Grund wird am Gehäuse eine teilweise oder vollständig umlaufende und an den Bechern angrenzende zylindrische Rückhalte-Wand angebracht, welche das sonst radial nach Außen laufende Wasser zurückstaut und zum Abfluss über die Seitenwände in axialer Richtung zwingt.

Die Patentschrift US 4,950,130 zeigt eine Peltonturbine, bei der die Ventilationsverluste des Laufrades, d.h. im Wesentlichen die Becher dazu benutzt werden, um Luft von außerhalb des Gehäuses anzusaugen und in einen Raum über einem geschlossenen Sumpf zu fördern. Durch den erhöhten Druck über dem Sumpf kann das Wasser aus dem Sumpf über eine Rohrleitung in Bassins, deren Wasserspiegel geodätisch höher liegt, gefördert werden. Um diese Wirkung zu erreichen, ist der Raum über dem Sumpf durch eine Begrenzungswand von einem Ventilationsraum getrennt. Die Begrenzungswand ist in umlaufender Richtung gesehen vor dem Einlass für Frischluft angeordnet und ist dort möglichst nah an die Kontur von Becher und Laufrad herangeführt, um möglichst wenig Luft aus dem Raum zurück in den Ventilationsraum zu verlieren.

In Patent Abstracts of Japan Bd. 16, Nr. 480 (M-1321) und JP 04175468 A werden im Zusammenhang mit einer Peltonturbine vor den Bechern radial gegen Außen angeordnete Leitbleche gezeigt sowie über einen begrenzten Umfang eine zylindrische Abdeckung zu der Peripherie der Becher.

In Patent Abstracts of Japan Bd. 1998, Nr. 11 und JP 10176648 A wird zum Zwecke der Verringerung der Schallausbreitung im Sumpf einer Peltonturbine vorgesehen, einen Wasservorhang am offenen Wasserabfluss des Sumpfs auszubilden. Über dem Sumpf ist ein wannenartiger Lochblechboden gezeigt, in welchem ein Teil des Spritzwassers gesammelt wird, um damit den Wasservorhang am Ausfluss des Sumpfs zu speisen.

Die Patentschrift AT 366476 zeigt, dass das Gehäuse einer Peltonturbine einstückig ausgeführt werden kann, wenn das Laufrad längs seiner Symmetrieebene durch eine Deckelöffnung abgesenkt wird und auf einer quer dazu durch die Lager eingeschobene Welle festgesetzt wird. Der dazugehörige Deckel ist als Kasten ausgebaut, welcher über einen Teil des Radumfanges die Becher mit einem zylindrischen Führungsblech und mit Seitenwangen gegen Spritzwasser aus dem restlichen Gehäuseraum abdeckt.

Die den nächstliegenden Stand der Technik darstellende und den Oberbegriff von Anspruchs 1 begründende Patentschrift CH 100772 zeigt eine vertikale Anordnung einer Peltonturbine, bei der obere und untere Ablenkbleche, die auf Höhe der Becherwurzeln ansetzen, seitlich aus den Doppelbechern austretende Spritzwasserströme in Raumbereiche ablenken, welche einen größeren Durchmesser als im Vergleich dazu der Laufraddurchmesser aufweisen. Zur besseren Führung des unteren Spritzwasserstromes ist in einem größeren Abstand unterhalb des Laufrades ein weiteres Leitblech in Form eines umlaufenden Schildes angebracht, welches beim Einfangen des unteren Spritzwasserstromes behilflich ist. Durch auftretende Variationen der Austrittsrichtungen der Spritzwasserströme entstehen unterschiedliche räumliche Reflexionen, die sich kreuzen und im ganzen Gehäuse verteilen können, wodurch große Schleppverluste am Laufrad entstehen.

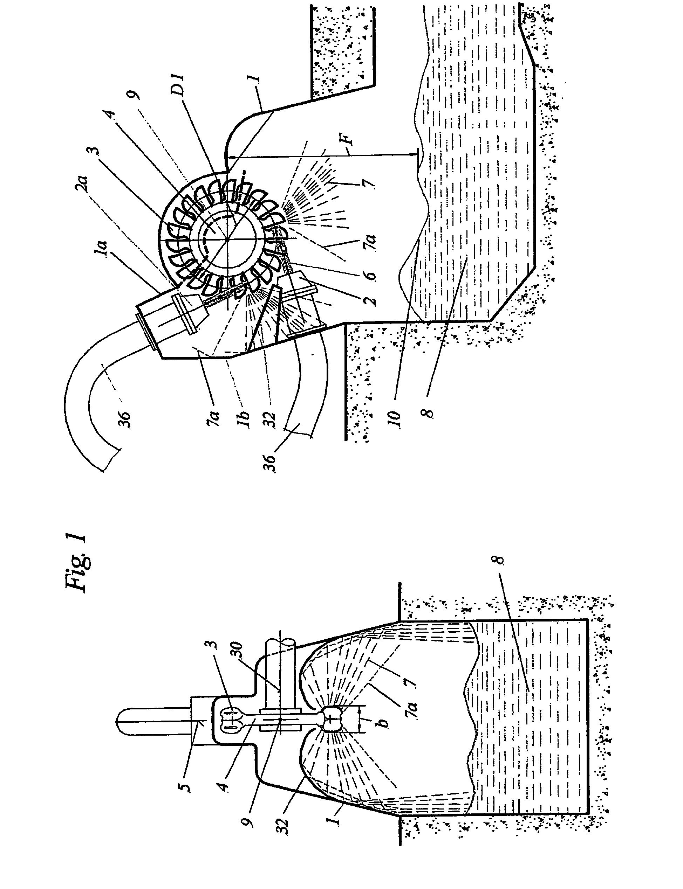

Bei Turbinen mit vertikaler Laufradachse (1-6 düsig) wird das nach oben austretende Wasser an der Decke zur Gehäuseaußenwand umgelenkt und nach oben abgeführt. Das aus der unteren Becherhälfte austretende Wasser trifft meist schräg die Außenwand bzw. direkt auf den freien Wasserspiegel auf. Das noch mit relativ hoher Geschwindigkeit aus den zwei Becherhälften austretende Wasser reisst noch sehr viel Luft, zwischen 30 und 70 % der Wassermenge, mit und verwirbelt im starken Masse die Oberfläche des Untei-wasserkanals. Um das Laufrad sicher vor den Auswirkungen der Schaumbildung zu schützen liegt es mit seinem Laufradmittelpunkt um den Freihang "F" d.h. etwa dem Zweifachen vom Freistrahldurchmesser "D1" höher als der Pegel des Unterwasserkanals, was einen Fallhöhen- bzw. Energieverlust bedeutet (siehe Figur 1, Prior Art).

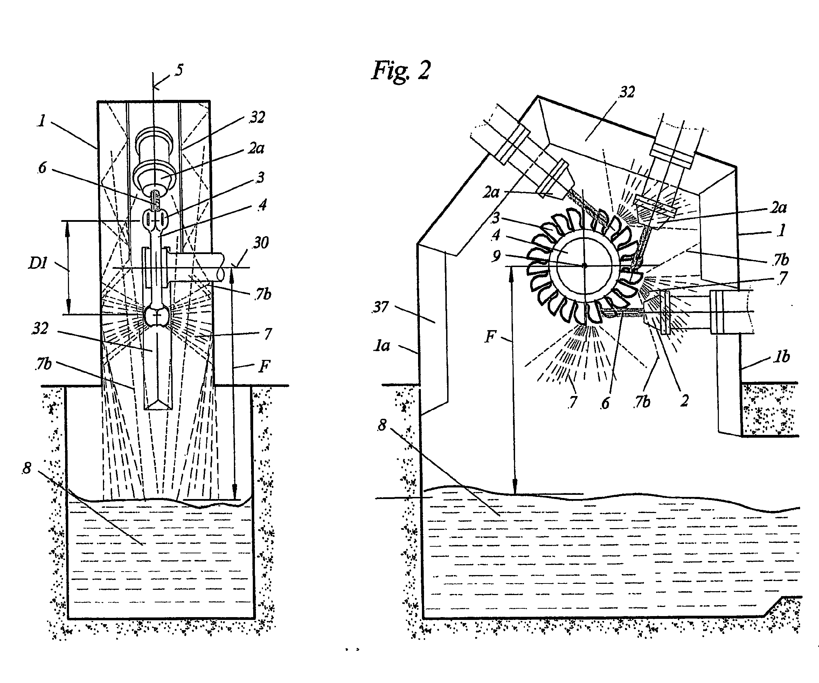

Bei Turbinen mit horizontaler Laufradachse (1-3 düsig) wird das Wasser seitlich , in Achsrichtung, an das Gehäuse gespritzt und über geeignete Umlenkungen nach unten abgeführt. Die Anzahl der Düsen ist wegen der schlechten Wasserabführung obenliegender Düsen aus dem Gehäuse auf (1) bis 2, maximal 3 begrenzt. Der Freihang "F" ist ähnlich wie bei der vertikalen Turbine dimensioniert. Bei höherer Düsenzahl ist die Entwässerung problematisch und nur noch mit Einbussen am Wirkungsgrad bzw. Leistung, vor allem im Vollastbereich möglich, weil das Austrittswasser nach oben abgelenkt wird, ohne dass es aus dem Bereich des Laufrades entfernt ist (siehe Figur 2, Prior Art).

Die grosse Schaumbildung hat nicht nur zur Folge, dass der Freihang entsprechend gross gewählt werden muss, sondern auch dass dieser Schaum über lange Beruhigungsstrecken abgebaut werden muss, wenn das Wasser weiter verwendet wird.
Letzteres ist bei Pelton- Gegendruckturbinen der Fall, wenn sie im Stand by Betrieb im "hydraulischen Kurzschluss" mit einer Pumpe am gleichen Wellenstrang laufen, um bei Bedarf in wenigen Sekunden eine verlangte Last an einen Generator abzugeben. Solche Anforderungen treten beispielsweise bei Pumpspeicheranlagen mit Peltonturbinen im Gegendruckbetrieb auf. Hohe Lastregelschwankungen treten dort mit starken Wasserstrom- und Druckschwankungen auf, welche das Laufrad mit Schwall- und Schaumbildung beeinträchtigen können. Um Pelton-Gegendruckturbinen bei stark schwankendem Unterwasserpegel sicher betreiben zu können, müssen diese durch Druckluft auf einer Kote frei geblasen werden, die einen sicheren schaumfreien Betrieb ermöglicht. In der Turbinenkammer wirkt dann ein Druck, der der jeweiligen Unterwasserkote des zugehörigen Unterwasserbeckens entspricht. Die über das Laufrad in das Unterwasser eingetragene Luft wird unterschieden in einen gelösten Anteil, der sich durch Entspannung aus dem Druckunterschied vor und nach der Düse ergibt, und in einen ungelösten Anteil, der vom Spritzwasser mitgerissen wird. Die Länge der Ausperlstrecke im Unterwasserkanal ist abhängig von der Eintragtiefe unter dem Laufrad sowie der gleichmäßigen Strömungsverteilung nach dem Laufrad. Damit sich das Niveau im Unterwasserkanal nicht verändert, muss der fehlende Luftanteil über Kompressoren ersetzt werden.

Jede Verlängerung eines Unterwasserkanals, der fast immer in einer Kaverne liegt , verteuert die Baukosten, wenn sie nur dem Ausgasen von Luft dient. Ein weiterer Punkt ist der, dass die Garantiegrenze für die entsprechend den IEC 60041- Richtlinien garantierten Leistungswerte bei dem Turbinenhersteller mit der Höhe vom Laufradmittelpunkt aufhört, während ein bestimmter Freihang, der ausserhalb dieser Garantiegrenze definiert ist, dem Betreiber vorgegeben wird, der bauseitig dafür zu sorgen hat, dass die Wasserabfuhr funktioniert. Aus diesem Grund hat sich ein Standard für den Freihang "F" eingebürgert, der bei dem Zweifachen des Freistrahldurchmessers "D1" liegt und der beim Betrieb der Anlagen wegen Schaumbildung auch voll ausgenutzt wird.

Hier setzt die Erfindung ein. Sie hat die Aufgabe, die Entwässerung der Turbine so zu verbessern, dass der Freihang um einen wesentlichen Betrag verkleinert werden kann, dass also Fallhöhe durch einen tiefer liegenden Einbau des Laufradmittelpunktes gewonnen wird.

Gemäß der Erfindung wird dies im Wesentlichen dadurch erreicht, dass als weiteres Führung- und Umlenkmittel innerhalb des Gehäuses ein äußerer Gehäusering mit einem vollständig umlaufenden, satteldachförmig nach Innen vorstehenden Vorsprung aus Vollmaterial vorhanden ist, dessen Spitze in der Symmetrie-Ebene in einem Abstand "S1" von 5 % bis 20 % einer Becherlänge "1" zu den Bechern angeordnet ist, damit das aus den Bechern austretende Spritzwasser von vagabundierenden Spritzern geschützt ist.

Der Erfindung liegt die Erkenntnis zu Grunde, dass der "Luftbedarf' der Turbine stark von der Weglänge und der Ausbreitungsmöglichkeit der Spritzwasserpartikel bis zum Austreffen auf die Oberfläche des Unterwasserkanals abhängig ist. Das heißt, bei eng geführtem beziehungsweise eng gebündeltem Spritzwasser wird die Angriffsfläche zur Luftanreicherung entsprechend reduziert. Dies darf aber nicht soweit führen, dass bei Normalbetrieb Spritzwasser zum Laufrad zurückgestaut wird.

Des weiteren liegt die Erkenntnis zu Grunde, dass das Laufrad und der Laufradbereich möglichst frei von vagabundierenden Spritzern und Wassernebel sein sollte, um die Ventilationsverluste niedrig zu halten.

Die Erfindung hat den Vorteil, dass die Installationshöhe "F" für das Laufrad auf weniger als das 1,5- fache des Freistrahldurchmessers festgelegt werden kann. Bei einer ursprünglichen Fallhöhe von 200m und einem Laufrad mit Freistrahldurchmesser von einem Meter entspricht dies einer Verbesserung um etwa 0,5 m der Fallhöhe d.h. 0,25%. Dadurch dass mit dem Verlassen der Becher eine gezielte Abfuhr des Spritzwassers erfolgt, die von anderen vagabundierenden Spritzwasserteilen abgeschirmt ist, können letztere sich weder an einer Vergrösserung der Schaumbildung noch an einem Bremsen am Laufrad beteiligen, wobei die Schaumbildung auch durch Bremsgitter, die parallel zum Laufrad angeordnet sind wesentlich reduziert wird. Wenn man bedenkt, dass die Turbinenhersteller im Augenblick für eine Wirkungsgradverbesserung von 0,1% eine Entwicklungszeit von einem Jahr annehmen, dann sind die hier aufgezeigten Vorteile offensichtlich.

Durch die Erfindung ist es möglich vertikale und horizontale Peltonturbinen mit hoher Energiedichte entsprechend der Anzahl der Düsen, das heisst mit einem Laufrad gleicher Grösse ohne Leistungs-Einbussen wegen Spritzwassers bis zu 6-düsig auszuführen.

Die Erfindung verbessert ebenfalls eine gutes Abführen des Spritzwassers bei wenig Luftbedarf und verhindert gleichzeitig Störungen der mitumlaufen Ventilationsluft, da keine hineinragenden Düsen sich störend auswirken können.

Die abhängigen Ansprüche 2 bis 29 stellen vorteilhafte Weiterbildungen der Erfindung dar. So bringt innerhalb des Gehäuses ein äusserer Gehäusering, der in der Symmetrie-Ebene in einem Abstand "S1" von 5% bis 20% einer Becherlänge "1" zu den Bechern angeordnet ist, schon erhebliche Vorteile, da er das direkt aus den Bechern austretende Spritzwasser vor reflektiertem vagabundierenden Spritzwasser schützt. Ein weiterer Vorteil liegt darin, dass bei einer dickeren Gestaltung dieses äusseren Gehäuseringes im Bereich der Symmetrie-Ebene die Freistrahlen in tangential zu dem Freistrahldurchmesser "D1" geführten Durchbrüchen ebenfalls vor vagabundierendem Spritzwasser geschützt sind. Wenn diese Verdickung in der Symmetrie-Ebene als Spitze eines dachförmig zum Laufrad vorstehenden Vorsprungs ausgeführt ist, kann gleichzeitig eine der Austrittsrichtung entsprechende seitliche Begrenzung für das Spritzwasser geschaffen werden. Solange die Düsen über den dachförmigen Vorsprung nach innen hineinragen, können sie selbst mit ihrem Düsenkörper nicht an der Erzeugung von vagabundierendem Spritzwasser beteiligt sein, während der äussere Gehäusering dafür sorgt, dass sich das aussen an ihm vorbei bewegende Spritzwasser nicht mit dem Spritzwasser auf seiner Innenseite vermischen kann. Je geringer die Durchbrüche im äusseren Gehäusering von dem Durchmesser eines Freistrahls abweichen, desto kleiner ist auf der Innenseite die von der Dachform abweichende Angriffsfläche für das Dispergieren von Spritzwasser. Wenn die Düsenkörper vollständig gegen den äusseren Gehäusering abgedichtet sind, kann keine Luft eingesogen werden, was beim Betrieb mit Luft-Überdruck im Gehäuse eine Rolle spielen kann. Solche Systeme existieren bei den oben erwähnten Anlagen zum Abfangen von Spitzenlasten, bei denen Turbine und Pumpe im hydraulischen Kurzschluss gefahren werden. Dort bilden Turbinengehäuse und Unterwasserkanal eine geschlossene Atmosphäre mit Überdruck, in welche von Kompressoren Luft eingeblasen wird, um die vom Spritzwasser mitgenommenen Luftanteile zu ersetzen. Wenn hier das Schäumen, d.h. der Lufteintrag vermindert wird, kann die Kompressorleistung kleiner dimensioniert werden.

Ein beiderseits vom Laufrad umlaufender innerer Gehäusering, der bis an die Wurzeln der Becher herangeführt ist, verbessert zusätzlich die Führung des aus den Bechern austretenden Spritzwassers. Es entsteht ein ringförmiger sich senkrecht von der Symmetrie-Ebene weg konisch öffnender Kanal, wobei die halben Öffnungswinkel α und β zwischen 55° und 80° gewählt sind, um die Ablaufrichtung des Spritzwassers aus den Bechern zu berücksichtigen. Ein Optimum für die Winkel α und β liegt zwischen 65° und 75°. Wenn das Spitzwasser in einem schleifend einfangenden Ringraum kanalisiert ist, kann dieser durch ein zylindrisches Anschlussstück fortgesetzt werden und sich später sogar verjüngen. Bautechnisch ist es sinnvoll, das zylindrische Anschlussstück auf einen Abstand von dem 1,4- bis dem 2-fachen der Becherbreite "b" von der Symmetrie-Ebene weg fortzusetzen.

Im zylindrischen Anschlussstück selbst oder daran anschliessend kann ein Bremsgitter vorgesehen sein, das auf einer Durchtrittsfläche mit einem mittleren Durchmesser entsprechend dem Freistrahldurchmesser "D1" und einer Ringbreite entsprechend mindestens einer Becherlänge "1" parallel zum Laufrad angeordnet ist, um Spritzwasser möglichst schaumfrei abzubremsen.

Ein Gitter entwickelt generell eine Schaum unterdrückende Wirkung und kann auch in bestehende Anlagen eingebaut werden. Zum Beispiel kann bei vertikaler Laufradachse unterhalb des Laufrades quer durch das Gehäuse über dessen ganzen Querschnitt ein Gitter angeordnet sein, um die Schaumbildung zu verringern.

Das Bremsgitter weist mindestens zwei Lagen von in einer Ebene parallel zu der Symmetrie-Ebene in einem Abstand zum Laufrad angeordneten Balken auf, die pro Lage in gleichem Abstand zueinander angeordnet sind. Dabei beträgt in einer Lage der Durchmesser der Balken 60% bis 70% des Mittenabstandes zweier benachbarter Balken. Die nächstfolgende Lage von gleich ausgerichteten Balken kann um einen halben Mittenabstand zu der davor liegenden Lage versetzt sein. Die Balken selbst haben einen runden Querschnitt und sind vorzugsweise als Rohre ausgeführt. Diese können beispielsweise zur Dämpfung mit Sand oder Split gefüllt werden, wenn sie durch die intermittierende Beaufschlagung mit Spritzwasser zu Schwingungen angeregt werden sollten. Um beispielsweise eine gute mechanische Stabilität eines Bremsgitters zu erreichen kann man drei Lagen von Rohren in Sandwichbauweise mit kurzen um 80 bis 90° versetzten Abstandshaltern verbinden.

Es hat sich als vorteilhaft erwiesen eine Anordnung zu wählen, bei der Sektoren von 3-lagigen Gittern wie Tortenstücke zu einem Kreisring zusammengesetzt sind. Die Lage der Balken oder Rohre ist dabei annähernd radial angeordnet. Die runde Form der Balken hat zunächst den Vorteil, dass ihre Wirkung wenig richtungsabhängig ist, wenn die Spritzwasserplatscher mit grosser Geschwindigkeit auftreffen. Eine weitere Wirkung besteht darin dass diese Spritzwasserplatscher in sich verformt werden, wenn sie auf der runden Oberfläche auftreffen. Bei einem versetzten Auftreffen auf der gekrümmten Oberfläche setzt eine Längung und Abbremsung der Spritzwasserplatscher ein, die an der darauf folgenden Lage fortgesetzt wird.

Um die Wirkung unterschiedlicher Austrittswinkel des Wassers aus den Bechern zu den Bremsgittern herabzumindern und um eine kurze Verweilzeit im Ringraum zu den Bremsgittern sicher zu stellen, haben Modellversuche gezeigt, dass Leitbleche mit einem Anstellwinkel ϕ von 25 bis 35° in einem Abstand S3 von 1/10 bis 1/20 der Becherbreite b an die Becher herangeführt eine weitere Verbesserung der Wasserabfuhr durch das Bremsgitter ergeben. In Bezug auf die dem Becher zugewandte Schneide des Leitblechs sollte diese im Ringraum von einer senkrecht zum Freistrahl angeordneten Radialen in Umlaufrichtung um einen Winkel λ von 25 bis 40° versetzt sein. Unterschiedliche Austrittswinkel entstehen beispielsweise bei stark variierender Fallhöhe. Anders ausgedrückt: mit derartigen Leitblechen kann mit der gleichen Anordnung eine ähnlich gute Wirkung der Bremsgitter für verschiedene Fallhöhen erreicht werden.

Bei einer horizontal angebrachten Laufradachse lässt sich beiderseitig vom Laufrad ein Bremsgitter anbringen, an welches ein Fallschacht zum Unterwasserkanal anschliesst, was in Kombination mit einem äusseren Gehäusering besonders wirkungsvoll ist, wenn die Bremsgitter an den Ring anschliessen. Bei einem fliegend gelagerten Laufrad kann die Welle in dem Fallschacht durch Schutzbleche ummantelt werden um dort nicht auch noch dem Spritzwasser ausgesetzt zu sein.

Ferner kann bei einer horizontal angeordneten Laufradachse, speziell im Hinblick auf eine Anlage mit mehr als drei gleichmässig am Umfang verteilten Düsen, ein beidseitig angebrachter Ringraum mit äusserem und inneren Gehäusering so durch Leitbleche zwischen innerem und äusserem Gehäusering ergänzt werden, dass dort keine rotierende Strömung in umlaufender Richtung entsteht, sondern das Spritzwasser gezielt in einen Sammelkanal umgelenkt wird. Dadurch dass die profilierten Leitbleche in umlaufender Richtung vor dem Strahleintritt einer nachfolgenden Düse angebracht sind, wird eine Kreuzung mit Spritzwasser der nachfolgenden Kammer vermieden. Um unabhängig vom Betriebszustand Wasserspritzer in vor- und rücklaufender Richtung ableiten zu können sind je Düsenanordnung zwei bis drei in u-mlaufender Richtung hintereinander gestaffelte Leitbleche unterschiedlicher Länge angebracht, wobei der Abstand "S2" des ersten Leitbleches zu den Bechern zwischen 10% bis 30% der Becherbreite "b" beträgt und ein Austrittswinkel γ von 35 bis 45° zu einer Senkrechten zur Laufragachse besteht. Die Leitbleche enden beiderseits des Laufrades in Umlaufrichtung der Becher gekrümmt als gleich gerichtete Führungen in einem umlaufenden Sammelkanal, von denen mindestens der Sammelkanal auf der Wellenseite spiralförmig ausgeführt ist, um alles Spritzwasser dieser Seite dank seiner restlichen kinetischen Energie über einen Punkt "P" oberhalb der Laufradachse zu führen und so Fallhöhe einzusparen, da nach dem Punkt "P" ein geringes Gefälle zum Unterwasserkanal ausreichend ist. Wenn beide Seiten mit einem derartigen Sammelkanal versehen sind, liegt das Laufrad mehr als hälftig in einem Trog, der über einen höchsten, über dem Wasserspiegel liegenden Punkt mit dem Unterwasserkanal verbunden ist und der bei einem Start der Anlage beispielsweise mit einer Strahlpumpe leer geschöpft wird. Bei Anlagen im Dauerbetrieb, die vielleicht nur wenige Unterbrüche pro Jahr haben. ist dies eine vertretbare Betriebsart, bei der die Vorteile von einer mehr als dreidüsigen Anordnung für eine horizontale Wellenanordnung überwiegen.

Bei einer weiteren Lösung für vertikal angeordneten Peltonturbinen wird das Spritzwasser, welches die eine Becherhälfte nach oben verlässt, über Leitbleche umgelenkt und jeweils tangential weg in einen oberen Sammelkanal abgeführt. Das Spritzwasser aus der unteren Becherhälfte, das nach unten abströmt, wird pro Düse über Leitbleche und tangential weg in einen nach oben abgewinkelten Sammelkanal nach oben gefördert. Die oberen und unteren Sammelkanäle münden über einen Überlauf in einen spiralförmigen Zulauf für den gemeinsamen Unterwasserkanal, wobei der Austritt des oberen Spritzwassers auf einer höheren Kote erfolgt. Dadurch, dass das obere Spritzwasser einen nur kurzen reibungsbehafteten Weg hat, kann es höher fördern. Das untere Spritzwasser wird ebenfalls auf möglichst kurzem Weg nach oben gefördert.

Der Fallhöhengewinn ist hierbei von der Restgeschwindigkeit und diese wiederum von der Nettofallhöhe und von der Becherauslastung abhängig. Die verbleibende Energie am Becheraustritt beträgt zwischen 2 und 4% der Gesamtenergie. Bei einem Ausnützungsfaktor von 0,3 für diese Restenergie kann das Spritzwasser um 0,6 bis 1,2% der Fallhöhe auf einen Punkt "P" über dem Laufradmittelpunkt gefördert werden und mit geringem Gefälle in den Unterwasserkanal fliessen. Da als Fallhöhengewinn ebenso der Freihang dazu gerechnet wird ist für dieses Beispiel mit einem Gewinn an Gesamtenergie von 0,8 bis 1,4% zu rechnen.

Nachfolgend wird die Erfindung anhand von Ausführungsbeispielen beschrieben. Es zeigen
- Fig. 1:: aus dem Stand der Technik schematisch eine Peltonturbine mit horizontaler Wellenanordnung und mit zwei Düsen,
- Fig. 2:: aus dem Stand der Technik schematisch eine Peltonturbine mit horizontaler Wellenanordnung und mit drei Düsen,
- Fig. 3:: schematisch eine erfindungsgemässe Anordnung für eine Peltonturbine mit horizontaler Welle und mit drei Düsen in einer Seitenansicht,
- Fig. 4:: schematisch die Anordnung von Figur 3 in einer Frontalansicht,
- Fig. 5:: schematisch einen vergrösserten Ausschnitt aus Figur 3 mit einem Sektor von einem Bremsgitter,
- Fig. 6:: schematisch eine Ansicht auf den Sektor des Bremsgitters in Figur 5,
- Fig. 7:: schematisch einen vergrösserten Schnitt durch ein Bremsgitter nach Figur 6, welches aus drei Lagen von Rohren in Sandwichbauweise besteht,
- Fig. 8:: schematisch einen Ausschnitt einer Peltonturbine mit horizontaler Wellenanordnung und mit einem mit Leitblechen bestückten Ringraum für Spritzwasser,
- Fig. 9:: schematisch einen Ausschnitt von Leitblechen in Figur 8 mit ihrer Anordnung zum Laufrad,
- Fig. 10:: schematisch einen Schnitt von Figur 8 mit Blick auf die Leitbleche,
- Fig. 11:: schematisch einen vertikalen Schnitt von einer Peltonturbine in vertikaler Anordnung mit fünf Düsen und mit einem negativen Freihang F,
- Fig. 12:: schematisch einen horizontalen Schnitt durch die Turbine von Figur 11,
- Fig. 13:: schematisch einen vergrösserten Ausschnitt eines Umlenkbogens mit Schlitzen aus Figur 12,
- Fig. 14:: schematisch einen vertikalen und
- Fig. 15:: einen horizontalen Schnitt von einer Peltonturbine in vertikaler Anordnung mit sechs Düsen und mit nur einem Bremsgitter,
- Fig. 16:: schematisch eine Anordnung gemäß Fig. 5, bei der ein Leitblech mit einer radial verlaufenden Schneide dargestellt ist, und
- Fig. 17:: schematisch eine Seitenansicht von Fig. 16.

In den nachfolgenden Beispielen sind funktional gleiche Teile mit gleichen Hinweiszeichen versehen.

### Beispiele zum Stand der Technik

In Figur 1 ist eine Peltonturbine horizontal mit ihrer Laufradachse (30) gelagert und wird durch die Düsen (2) und (2a) an ihren Doppelbechern (3) der Becherbreite "b" an einem Freistrahl-Durchmesser "D1" jeweils mit einem Freistrahl (6) angespritzt. Das Laufrad (4) ist durch ein Gehäuse (1), welches gegen unten zu einem Unterwasserkanal (8) offen ist, abgedeckt. Der Laufradmittelpunkt (9) liegt auf einer Installationshöhe "F" über dem Wasserspiegel (10) des Unterwasserkanals (8).

Der Freistrahl einer Düse trifft auf die Schneiden einer Symmetrie-Ebene (5) auf die Schneiden der vorbeilaufenden Doppelbecher (3) und wird entgegen der Umlaufrichtung umgelenkt, wobei er beim Verlassen der Becher als Spritzwasser (7) fächerförmig und intermittierend an das Gehäuse (1) und an die Ablenkbleche (32) auftrifft. Dabei wird das Spritzwasser (7) der Düse (2) am besten in den Unterwasserkanal (8) abgeleitet. Das Spritzwasser der Düse (2a) trifft teilweise aus ein Leitblech (32) das dachförmig über die nächste Düse (2) in Drehrichtung angebracht ist um den Freistrahl (6) vor den vagabundierenden Spritzwasseranteilen (7a) zu schützen. Zu bemerken dazu ist, dass sich die Hauptrichtung des Spritzwassers (7) entsprechend einer Fallhöhenänderung ebenfalls verschiebt.

Die Restenergie des Spritzwassers ist dabei noch so gross, dass es sich im ganzen Gehäuse (1, 1a, 1b) unter Schaumbildung verteilt. Erfahrungsgemäss muss die Installationshöhe "F" dem Zweifachen des Freistrahldurchmessers "D1" entsprechen, damit das Laufrad (4) nicht durch rückgestautes Spritzwasser (7) und Schaum zusätzlich gebremst wird. Die beiden Zuleitungen (36), welche als Verzweigung aus einer gemeinsamen Druckleitung entstehen, könnte man um eine weitere Zuleitung (36) ergänzen um so zu einer Anordnung gemäss Figur 2 zu kommen. Aber schon hier wird ersichtlich, dass Spritzwasser einer entgegen der Umlaufrichtung der Becher angebrachten zusätzlichen Düse einen wesentlichen längeren Weg mit sich kreuzenden und reflektierten Spritzwasserströmen durchläuft und so eine grössere Bremswirkung am Laufrad verursacht als die Düsen in einer ein- oder zweidüsigen Anordnung. Der Gesamtwirkungsgrad ist daher geringfügig schlechter als bei der Anordnung nach Figur 1 und würde sich wesentlich verschlechtern, wenn man eine weitere Düse entgegen der Umlaufrichtung der Becher anbringen würde.

### Beispiele gemäss der Erfindung

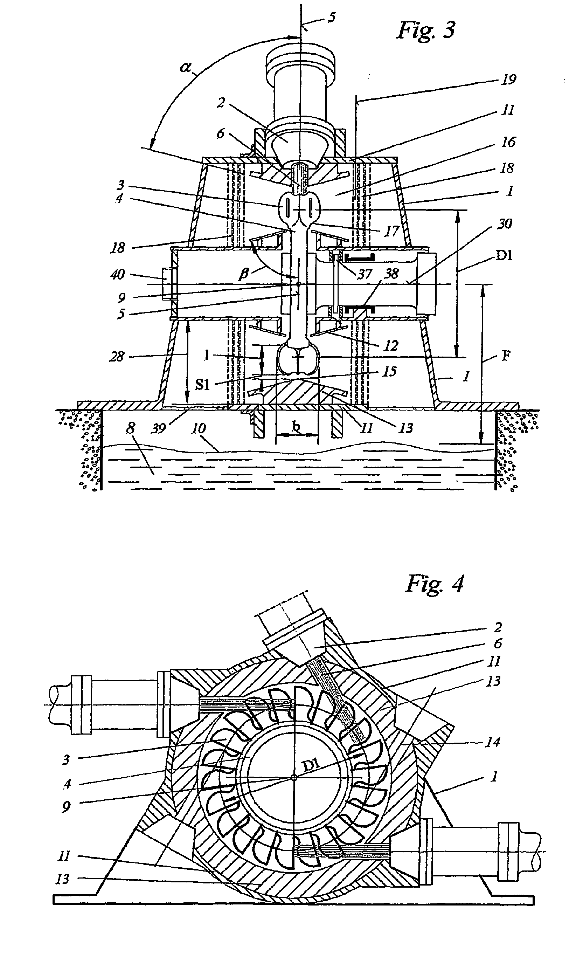

In den Figuren 3 und 4 ist ein Ausführungsbeispiel einer Peltonturbine mit drei von fünf möglichen Düsen (2) und mit einer horizontal angeordneten Laufradachse (30), welche in Lagern (38) gelagert ist, gezeigt. Innerhalb des Gehäuses (1) besteht ein äusserer Gehäusering (11), welcher das Laufrad (4) vollständig umschliesst. Ein innerer Gehäusering (12) setzt beidseitig vom Laufrad jeweils im Bereich der Wurzeln (17) der Becher an und bildet mit dem äusseren Gehäusering (11) einen radial sich konisch öffnenden Ringraum (16). In der Symmetrie-Ebene (5) des Laufrades wird ein aus den Düsen austretender Freistrahl (6) an den Schneiden der Doppelbecher jeweils geteilt und nach seiner Umlenkung und Impulsabgabe an die Becher in einen Ringraum (16) unter unterschiedlichen Austrittswinkeln abgegeben. Die gezeigte Anordnung mit drei Düsen (2) hat den Vorteil, dass die Düsen von aussen zugänglich sind.

Der äussere Gehäusering (11) bildet einen nach innen vorstehenden dachförmigen Vorsprung (13), dessen Spitze (15) in der Symmetrie-Ebene (5) liegt und in einem geringen Abstand "S1" von 5 bis 20% einer Becherlänge "1" zu den Bechern (3) angeordnet ist, um mit dem Laufrad umlaufendes und auszentrifugiertes Spritzwasser möglichst frühzeitig in den Ringraum (16) abzuleiten. In der Symmetrie-Ebene (5) liegen jeweils Durchbrüche (14) für den Freistrahl (6) im äusseren Gehäusering (11). Durch den geringen Abstand der Spitze (15) zu den Bechern 3 bleibt der Freistrahl (6) auf seinem Weg zu den Bechern von Spritzwasser unbehelligt. Die Düsen (2) sind zum äusseren Gehäusering (11) abgedichtet, damit möglichst wenig Luft mit dem Freistrahl eingezogen wird. Der Freistrahl ist im Durchbruch (14) relativ eng, aber berührungsfrei umschlossen, damit in der nach innen vorstehenden Dachform durch den Unterbruch möglichst geringe Angriffsflächen für umlaufende Spritzwasserpartikel entstehen.

Die Kanalisierung des aus den Bechern (3) austretenden Spritzwassers (7) verhindert gleichzeitig, dass vagabundierendes Spritzwasser in Laufradnähe eingemischt wird. Die Dachform des äusseren Gehäuserings (11) bildet mit der Symmetrie-Ebene (5) einen Winkel α von 75°. Ebenso bildet jeweils der innere Gehäusering (12) mit der Symmetrie-Ebene (5) einen Winkel β von 75°. Der sich öffnende Ringraum (16) wird durch ein zylindrisches Anschlussstück im äusseren Gehäusering (11) und durch ein zylindrisches Gehäuse für ein Lager (38) fortgesetzt. In diesem zylindrischen Teil des Ringraums (16) ist ein Bremsgitter (18) eingebaut, welches über den Umfang aus mehreren Segmenten zusammengesetzt ist. Das Gitterteil (18) eines Segments besteht aus drei Lagen von versetzt hintereinander liegenden Rohren.

Das im Ringraum (16) kanalisierte Spritzwasser, welches intermittierend auf dem Bremsgitter auftrifft, hat immer noch eine recht grosse Geschwindigkeit und Restenergie, die im Bremsgitter (18) durch Verzerren, Verformen und Ineinanderlaufen von Spritzwasserströmen verringert werden. Nach dem Austritt aus dem Bremsgitter wird das Spritzwasser vom Gehäuse (1) abgefangen und fällt unter Schwerkraft durch ein Lochblech (39) in den Unterwasserkanal (8). Es gibt daher keine Spritzwasserplatscher mehr, die wie Projektile in den Unterwasserkanal schiessen und Luft zur Schaumbildung nach sich ziehen. Dies erlaubt es den Laufradmittelpunkt (9) in einer Höhe "F" über dem Wasserspiegel (10) anzubringen, die nur noch dem Freistrahldurchmesser "D1" entspricht.

Das zylindrische Gehäuse für das Lager (38) ist auf der anderen Laufradseite fortgesetzt und mit einer Öffnung (40) für Belüftung. Das Lager (38) ist durch eine berührungslose Labyrinthdichtung (37) zum Laufrad gegen Spritzwasser abgedeckt, insbesondere zum Schutz bei instationären Betriebszuständen. Die Segmente des Bremsgitters (18) bilden einen Kreisring, mit einer Durchtrittsfläche (28), wobei eine erste Lage der Rohre in einer Ebene (19) parallel zur Symmetrie-Ebene (5) des Laufrades liegt. Dabei ist die Ebene (19) um etwas mehr als eine Becherbreite "b" von der Symmetrie-Ebene entfernt.

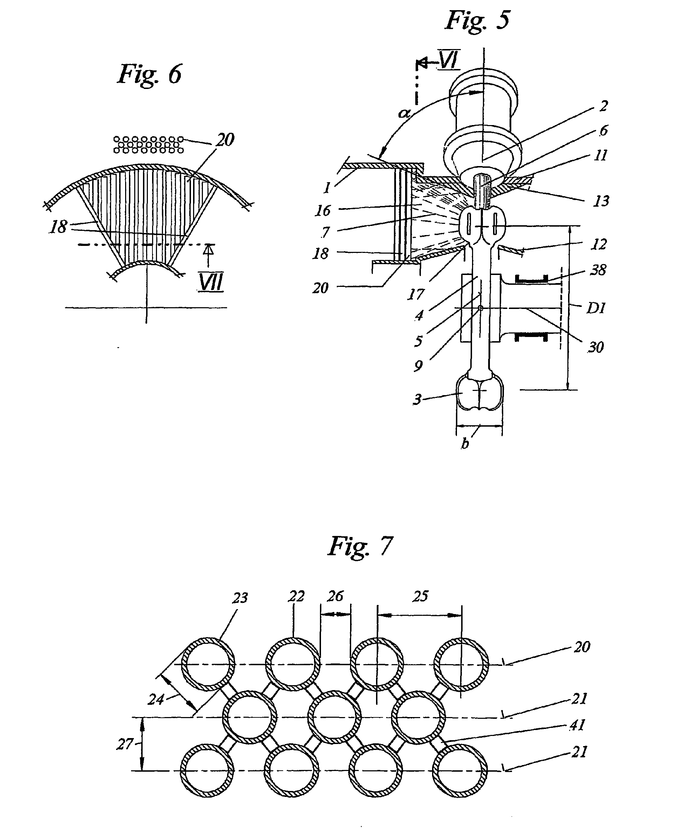

In den Figuren 5, 6 und 7 wird mehr auf ein Bremsgitter eingegangen. Das Spritzwasser (7) im Ringraum (16) trifft auf eine erste Lage (20) von parallelen Rohren (23) mit Rohrdurchmesser (24) und mit einem Zwischenraum (26) , der kleiner als der Rohrdurchmesser selbst ist. Die erste Lage (20) und jede weitere Lage (21) sind in Sandwichkonstruktion durch Klötzchen (41) miteinander verbunden. Die Rohre einer weiteren Lage sind jeweils um einen halben Mittenabstand (25) zu den Rohren der davor liegenden Lage versetzt. Die Rohre eines Segmentes (18) Fig. 6 sind so angeordnet, dass die mittleren Rohre radial verlaufen. Eine Anordnung gemäss Figur 7 kann beispielsweise die folgenden Dimensionen aufweisen:
- Rohre (23) mit einem Durchmesser (24) von 100 mm
- Einen Mittenabstand (25) von 150 mm
- Einen Abstand der Lagen (20, 21) von 100 mm, und
- Eine Länge der Klötzchen (41) von etwa 25 mm.

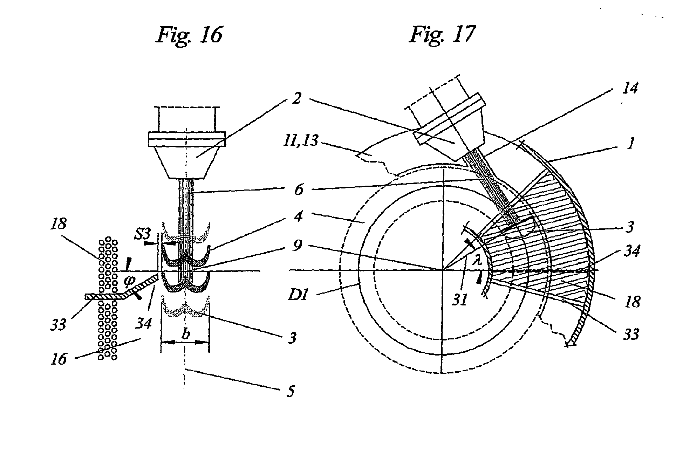

In den Figuren 16 und 17 ist eine Ergänzung zur Figur 5 dargestellt, in welcher zusätzlich Leitbleche 33 entsprechend der Anzahl Freistrahlen 6 im Ringraum 16 angebracht sind, um Spritzwasser, welches in Umlaufrichtung der Becher 3 austritt, zu kanalisieren. Damit wird verhindert, dass die Bremsgitter 18 wegen ungünstigem Anspritzwinkel einen Rückstau erzeugen. Die Leitbleche 33 haben radial verlaufende Schneidkanten 34 in einem Abstand S3 zu den Bechern von einem Zehntel bis zu einem Zwanzigstel der Becherbreite b. Sie stehen in einem Anstellwinkel ϕ von 25 bis 35° von der axialen Richtung zu den Bechern 3 hin. Bezogen auf eine senkrecht zum Freistrahl 6 angeordneten Radiale 31 sind die Schneidkanten 343 in Umlaufrichtung des Laufrades um einen Winkel λ von 25-40° versetzt. Die Leitbleche reichen bis nahe an die Bremsgitter heran oder sind abgeknickt durch die Bremsgitter hindurchgeführt. Konstruktiv ist es ein Kosten sparender Vorteil die Trennwände zwischen einzelnen Sektoren der Bremsgitter so in Umlaufrichtung festzulegen, dass sie als abgeknickte Fortsetzung des Leitblechs gestaltet sind.

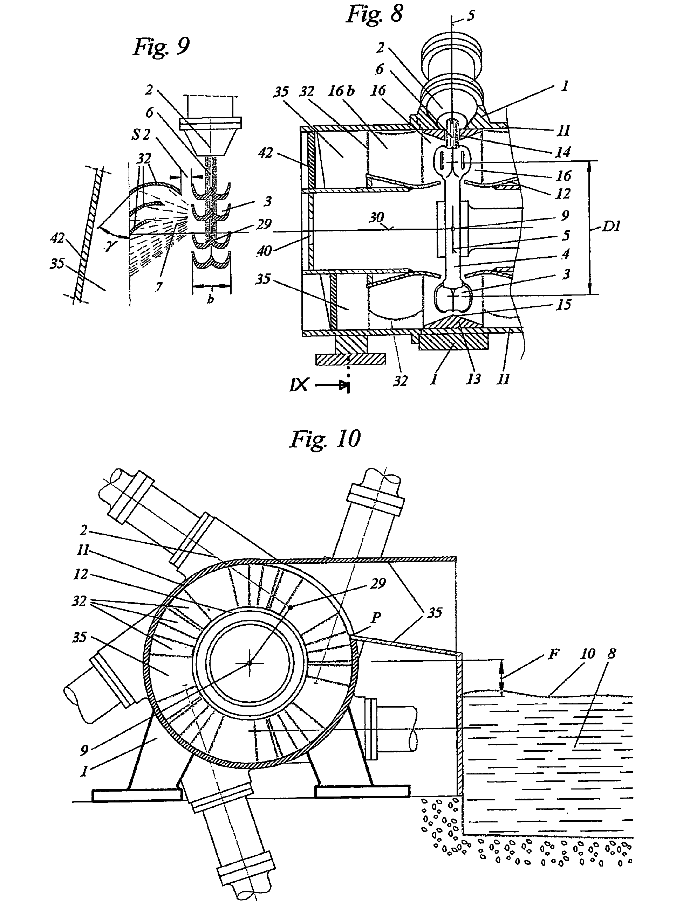

In den Figuren 8, 9 und 10 ist eine Peltonturbine in horizontale Wellenanordnung mit fünf Düsen (2) am Umfang versehen. Ein sich konisch öffnender Ringraum (16) setzt sich mit einem Anschlussstück (16b) im äusseren Gehäusering (11) zylindrisch und im inneren Gehäusering (12) mit einer Krümmung zum äusseren Gehäusering hin fort. In dem so gebildeten sich verengenden Kanal sind Leitbleche (32) angebracht, die jeweils als Dreiergruppe in Umlaufrichtung hintereinander einer Düse (2) zugeordnet sind. Dabei liegen die Leitbleche in Umlaufrichtung jeweils vor dem Tangentenpunkt (29) der zugehörigen Düse an den Freistrahldurchmesser "D1". Die Eintrittskante des in Umlaufrichtung ersten Leitblechs (32) besitzt einen kürzesten Abstand "S2" zu den Bechern, während die nachfolgenden Leitbleche (32) mit ihren Eintrittskanten jeweils weiter nach aussen versetzt sind und die Austrittskanten in einem gleichen Abstand zum Laufrad in einen Sammelkanal (35) einmünden. Der Austrittswinkel γ aus den Leitblechen zu einer Senkrechten zur Laufradachse beträgt 45°. Die Aussenwand des Sammelkanals (35) vergrössert sich stirnseitig in umlaufender Richtung der Becher in Form einer Wendel (42), welche über einen höchsten Punkt "P", der höher als der Laufradmittelpunkt (9) liegt, einen Überlauf in den Unterwasserkanal (8) hat. Diese durch die geführte Umlenkung erhaltene Restenergie wird zur Überwindung des höchsten Punktes "P" benötigt. Die Leitbleche (32) weisen eine leichte Krümmung entgegengesetzt zu der Krümmung der Becherhälften auf. Der Abstand "S2" der Eintrittskante des vorderen Leitblechs zu den Bechern entspricht 20 bis 30% der Becherbreite "b". Da die kinetische Energie des Spritzwassers durch eine straffe Strömungsführung ausgenutzt wird, ergibt sich eine kompakte Bauform, bei der die Düsen von aussen erreichbar sind, und ergibt sich ein Freihang "F", der nur ein Bruchteil des Freistrahldurchmessers "D1" ausmacht.

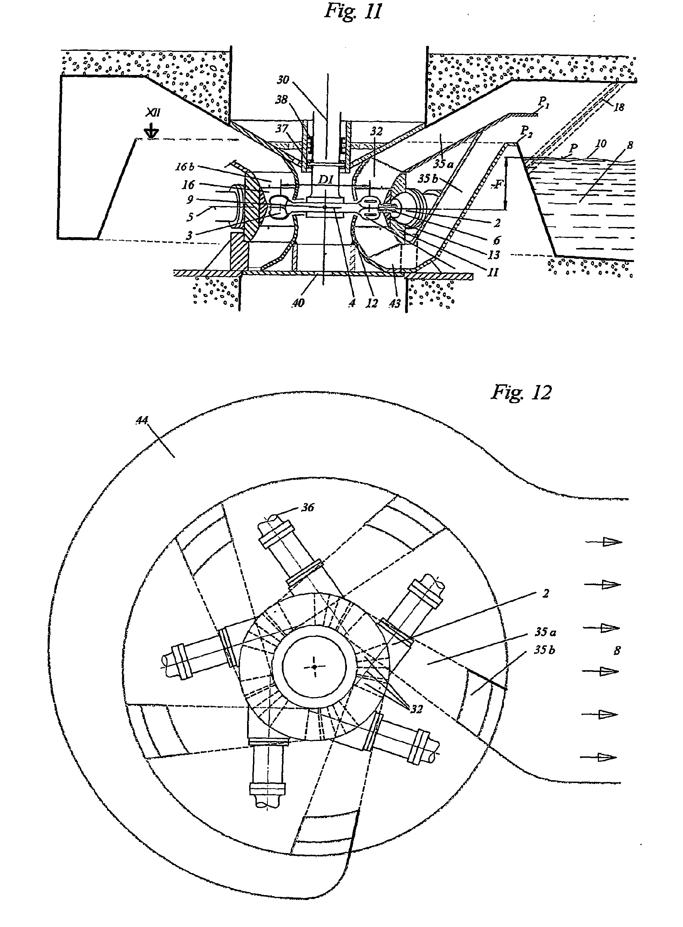

Im Beispiel der Figuren 11 und 12 mit einer fünfdüsigen vertikalen Aufstellung einer Peltonturbine wird der Ringraum (16) ebenfalls in einem Anschlussstück (16b) zu jeder Düse mit drei Leitblechen (32) versehen, die wie in Figur 9 bezüglich ihrer Eintrittskanten zu den Bechern gestaffelt angeordnet sind. Hingegen besitzt die Austrittsrichtung eine zusätzliche radiale Komponente gegen aussen. Die aus den drei Leitblechen austretende Strömung wird jeweils auf einen separaten tangential abgehenden Sammelkanal (35a, 35b) geführt, wobei der untere Sammelkanal einen zusätzlichen Umlenkbogen (43) aufweist. Der obere und der untere Sammelkanal (35a, 35b) liegen übereinander und führen tangential schräg nach oben weg und über einen Überlauf mit höchstem Punkt P1, P2 in einen spiralförmig sich erweiternden Zulauf (44) des Unterwasserkanals 8. Wenn dieser spiralförmige Zulauf (44) genügend breit und tief ausgeführt ist, können die Verteilleitungen (36) zu den Düsen (2) die Spirale kreuzen ohne den Wasserablauf zu behindern.

In Figur 11 ist am Übergang von der Spirale in den Unterwasserkanal (8) oberhalb des Wasserspiegels (10) ein Bremsgitter (18) strichliert angedeutet, welches die Strömung am Austritt der vordersten Sammelkanäle (35a, 35b) brechen soll. Der Freihang "F" ist negativ, da sich der Laufradmittelpunkt (9) unterhalb des Wasserspiegels (10) des Unterwasserkanals (8) befindet. Entsprechend gross ist der Gewinn an Fallhöhe, welcher der Summe vom negativen Abstand "-F" und dem bisher üblichen Freihang vom Zweifachen des Freistrahldurchmessers "D1" entspricht.

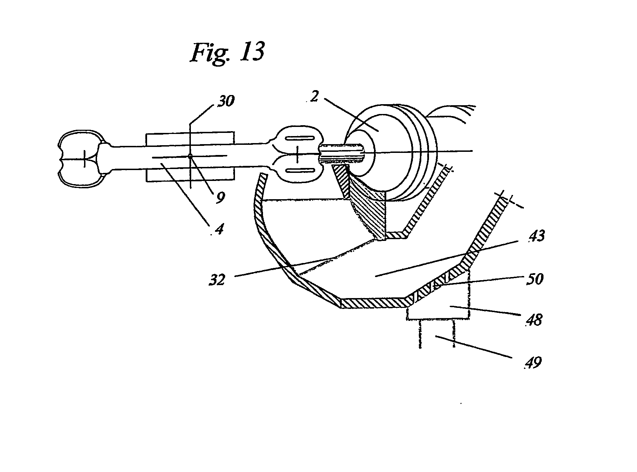

Das Laufrad (4) liegt nach einer Abschaltung in einem wassergefüllten Trog, der beim nächsten Start beispielsweise mit einer Strahlpumpe leer gepumpt werden muss. Es kann hilfreich sein, die Pumpe über den ganzen Startvorgang weiter laufen zu lassen und spezielle Ablaufleitungen vorzusehen, die rückstauende Strömungsteile im Ansaugbereich der Pumpe sammeln. Das heisst es muss ein leerer Sammelbehälter (48) unterhalb der Peltonturbine vorhanden sein, in welchen das Wasser abfliessen kann, wobei der Behälter auch der allgemeine Sumpf des Kraftwerkes sein kann. In Figur 13 ist ein Ausschnitt des Umlenkbogens gezeigt, der durch schräg einmündende Querschlitze (50) unterbrochen ist, wobei die Schlitze rückfliessendes Wasser über Ablaufleitungen (49) zum Sammelbehälter leiten. Gleichzeitig haben die Schlitze den Vorteil, dass im Normalbetrieb während der Umlenkung Luft durch sie eingezogen wird, welche die Reibung für den längeren Weg des Wassers auf der Unterseite des Laufrades verringert.

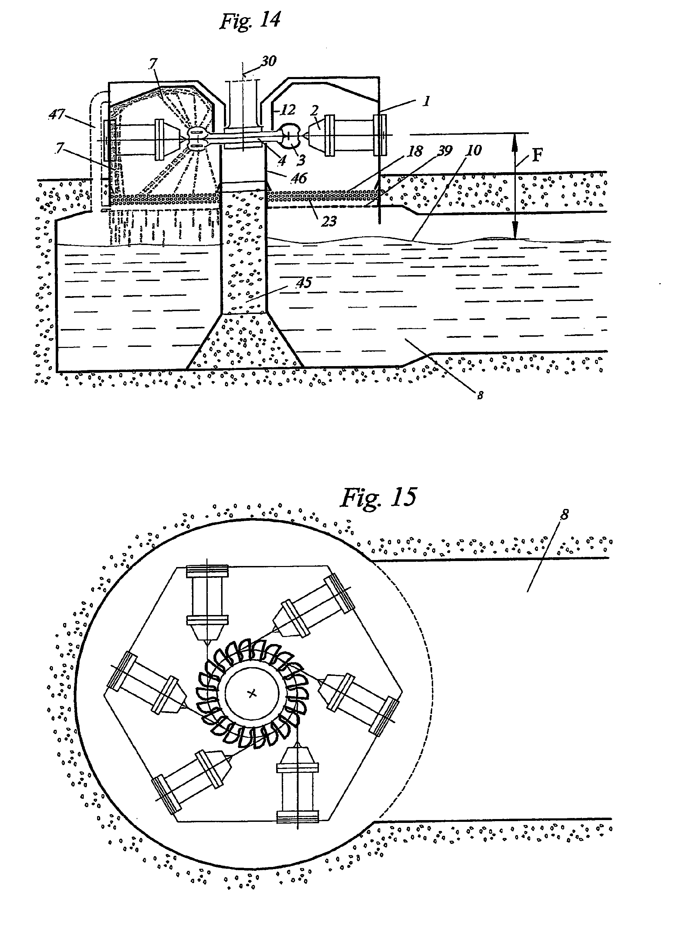

Im Beispiel von Figur 14 und 15 ist eine sechsdüsige Anlage mit vertikaler Laufradachse (30) im Vertikalschnitt und im Horizontalschnitt gezeigt, wobei auf der linken Seite des Vertikalschnitts der Weg des Spritzwassers (7) angedeutet ist. Ein ringförmiges oder einer Düsenzahl "n" entsprechendes n-eckiges Gehäuse (1) stützt sich auf einer Betoneinfassung des Unterwasserkanals (8) ab. Die Düsen (2) ragen in herkömmlicher Bauart weit in das Gehäuse hinein. Ein innerer Gehäusering (12) setzt im oberen Teil an den Becherfüssen an und wird nach einen ersten Knick von 45° in einen konischen Ringteil weitergeführt, der in einen horizontalen Ringteil übergeht, an welchen mit einem weiteren Knick von 20° abwärts ein konischer Ringteil bis zur Aussenwand des Gehäuses (1) anschliesst. Mit dieser Anordnung wird der nach oben austretende Teil des Spritzwassers ebenfalls nach unten abgelenkt. Konzentrisch mit der Laufradachse (30) erhebt sich aus dem Unterwasserkanal (8) eine Säule (45) bis in das Gehäuse hinein und trägt ein längsgeteiltes Schutzrohr (46), welches unmittelbar bis an die Laufradnabe heranreicht und eine Führung für Spritzwasser bildet. Dieses kann auch als Belüftungsrohr dienen.

Unterhalb des Laufrades (4) sind in einem Abstand von etwa zwei Drittel des Freistrahldurchmessers "D1" zum Laufradmittelpunkt ein dreilagiges Bremsgitter (18) und darunter ein Lochblech (39) angebracht, welche sich über den ganzen Gehäusequerschnitt erstrecken. Dabei wird die Konstruktion von Bremsgitter (18) und Lochblech (39) in der Mitte durch die Säule 45 und aussen - wie das Gehäuse - durch die Betonumrandung des Unterwasserkanals abgestützt.

Das Bremsgitter bremst das Spitzwasser und nimmt seine kinetische Energie, die sonst zum Lufteintrag in das Unterwasser führt. Mit der Verlangsamung der Strömung und durch den Rückstau auf dem mit etwas weitern Abstand befindlichen Lochbleches wird ebenfalls noch Luft vom Spritzwasser abgetrennt. Ein Teil dieser Luft gelangt seitlich in Ausgleichsleitungen (47), welche den obersten Raum des Gehäuses zur Welle hin mit dem Unterwasserkanal verbinden. Der Freihang "F" beträgt etwa das 1,2-fache des Freistrahldurchmessers "D1".

Mit einer derartigen Gitterkonstruktion, die wie in Figur 6 aus einem Kreisring mit Gittersegmenten bestehen kann, wird auch eine Arbeitsplattform geschaffen, die vollen Zugang zum Laufrad (4) gewährt, wenn das längsgeteilte Schutzrohr (46) entfernt wird. Das Laufrad (4) kann von der Welle gelöst, auf der Säule (45) abgesetzt und seitlich durch eine Öffnung im Gehäuse ausgefahren werden, sowie in umgekehrter Reihenfolge montiert werden. Ebenso sind die Düsen (2) über diese Plattform zu Wartungszwecken erreichbar.

Die Balken oder Rohre im Bremsgitter (18) können auch in einer anderen Richtung als radial zur Laufradachse (30) verlaufen. In Figur 14 verlaufen die Rohre (25) Segmentweise tangential. Die relative Lage der Rohre zueinander entspricht der in Figur 7.

### Bezugszeichenliste

- 1: Gehäuse
- 1a: Gehäusewand
- 1b: Gehäusewand
- 2: Düse
- 2a: weitere Düse(n)
- 3: Doppelbecher
- 4: Laufrad
- 5: Symmetrie-Ebene
- 6: Freistrahl
- 7a: Spritzwasser
- 7b: Spritzwasser
- 7: Spritzwasser
- 8: Unterwasserkanal
- 9: Laufradmittelpunkt
- 10: Wasserspiegel
- 11: Äusserer Gehäusering
- 12: Innerer Gehäusering
- 13: dachförmiger Vorsprung
- 14: Durchbruch
- 15: Spitze
- 16: Ringraum
- 16b: Anschlussstück
- 17: Wurzel
- 18: Bremsgitter
- 19: Ebene
- 20: 1. Lage
- 21: weitere Lage
- 22: Balken
- 23: Rohr
- 24: Rohrdurchmesser
- 25: Mittenabstand
- 26: Zwischenraum
- 27: Lagenabstand
- 28: Durchtrittsfläche
- 29: Tangentenpunkt
- 30: Laufradachse
- 31: Radiale
- 32: Leitblech
- 33: Leitblech
- 34: Schneidkante
- 35: Sammelkanal, 35a oberer Sammelkanal, 35b unterer Sammelkanal
- 36: Verteilleitung
- 37: Labyrinthdichtung (berührungsfrei)
- 38: Turbinenlager
- 39: Lochblech
- 40: Öffnung
- 41: Klötzchen
- 42: Wendel
- 43: Umlenkbogen
- 44: Zulauf
- 45: Säule
- 46: Belüftungsrohr
- 47: Ausgleichsleitung
- 48: Sammelbehälter
- 49: Ablaufleitung
- 50: Querschlitz
- b: Becherbreite
- 1: Becherlänge
- D1: Freistrahldurchmesser
- F: Installationshöhe (Freihang)
- P, P1, P2: Punkt
- S1: Abstand
- S2: Abstand
- S3: Abstand
- α, β, γ: Winkel
- λ, ϕ: Winkel

## Patentansprüche

1. Peltonturbine mit einem Wasserabfuhrsystem für Leistungen von mehr als 100 kW, wobei innerhalb eines Gehäuses (1) ein Laufrad (4) Doppelbecher (3) mit einer Becherbreite "b" und mit einer Becherlänge "1" aufweist, in welche Doppelbecher (3) Düsen (2), die in einer Symmetrie-Ebene (5) der umlaufenden Becher angeordnet sind, tangential auf einem Freistrahldurchmesser "D1" jeweils einen Freistrahl (6) einspritzen und wobei aus den Bechern (3) austretendes Spritzwasser (7) eingeschlossen durch Gehäusewände (1a, 1b) in einen Unterwasserkanal (8) fällt, wobei innerhalb des Gehäuses (1) an den Wurzeln der Becher (3) ansetzend und über den vollständigen Umfang des Laufrades (4) Führungsmittel in Form eines inneren Gehäuserings (12) angeordnet sind, die Spritzwasser (7) führen und umlenken,
**dadurch gekennzeichnet,**
**dass** als weiteres Führungs- und Umlenkmittel innerhalb des Gehäuses (1) ein äußerer Gehäusering (11) mit einem vollständig umlaufenden, satteldachförmig nach Innen vorstehenden Vorsprung (13) aus Vollmaterial vorhanden ist, dessen Spitze (15) in der Symmetrie-Ebene (5) in einem Abstand "S1" von 5 % bis 20 % einer Becherlänge "1" zu den Bechern (3) angeordnet ist, damit das aus den Bechern austretende Spritzwasser von vagabundierenden Spritzern (7) geschützt ist.

2. Peltonturbine nach Anspruch 1, **dadurch gekennzeichnet, dass** der satteldachförmige äußere Gehäusering (11) tangential zu dem Freistrahldurchmesser "D1" Durchbrüche (14) aufweist, welche die Freistrahlen (6) der Düsen gegen Spritzwasser (7b) abdecken, wobei die Düsen selbst in den Umriss des dachförmigen Vorsprungs (13) aus Vollmaterial nach Innen hineinragen.

3. Peltonturbine nach Anspruch 1 oder 2, **dadurch gekennzeichnet, dass** die Düsen (2) die Durchbrüche (14) gegen Außen abschließen, um das Einziehen von Luft durch den Freistrahl (6) zu verhindern.

4. Peltonturbine nach einem der Ansprüche 1 bis 3, **dadurch gekennzeichnet, dass** die Durchbrüche (14) nur einen geringfügig größeren Durchmesser als der Freistrahl (6) aufweisen, damit der äußere Gehäusering (11) in der Symmetrieebene (5) am dachförmigen Vorsprung (13) nur geringe Unterbrüche gegenüber umlaufendem Spritzwasser (7) aufweist.

5. Peltonturbine nach einem der Ansprüche 1 bis 4, **dadurch gekennzeichnet, dass** beidseitig der Symmetrie-Ebene (5) der dachförmige äußere Gehäusering (11) mit der Symmetrie-Ebene einen Winkel α zwischen 55° und 80° und mindestens ein innerer Gehäusering (12) mit der Symmetrieebene einen Winkel β zwischen 55° und 80° bilden, um einen sich in axialer Richtung öffnenden Ringraum (16) zu schaffen.

6. Peltonturbine nach Anspruch 5, **dadurch gekennzeichnet, dass** die Winkel α und β zwischen 65° und 75° liegen.

7. Peltonturbine nach einem der Ansprüche 1 bis 6, **dadurch gekennzeichnet, dass** der Ringraum (16) konisch ist und durch ein zylindrisches Anschlussstück (16b) bis auf einen Abstand von dem 1,4-bis 2-fachen der Becherbreite "b" von der Symmetrie-Ebene (5) weg fortgesetzt ist.

8. Peltonturbine nach einem der Ansprüche 1 bis 7, **dadurch gekennzeichnet, dass** mindestens an einem Ringraum (16, 16b) ein zur Symmetrie-Ebene parallel angeordnetes Bremsgitter (18) anschließt, welches dem. Spritzwasser (7) einen Großteil seiner kinetischen Energie nimmt und die Schaumbildung auf dem Weg in den Unterwasserkanal (8) reduziert.

9. Peltonturbine nach Anspruch 8, **dadurch gekennzeichnet, dass** das Bremsgitter eine in einer Ebene (19) erste Lage (20) von parallel zueinander im gleichen Mittenabstand (25) angeordneten Balken (22) aufweist.

10. Peltonturbine nach Anspruch 9, **dadurch gekennzeichnet, dass** das Bremsgitter hinter der ersten Lage (20) mindestens eine weitere Lage (21) von gleich ausgerichteten Balken (22) aufweist, die zu den davor liegenden Balken (22) um einen halben Mittenabstand (25) der Balken versetzt sind.

11. Peltonturbine nach einem der Ansprüche 9 oder 10, **dadurch gekennzeichnet, dass** die Balken (22) einen runden Querschnitt aufweisen oder als Rohre (23) ausgeführt sind.

12. Peltonturbine nach einem der Ansprüche 9 bis 11, **dadurch gekennzeichnet, dass** die Balken einer Lage (20, 21) 60 % bis 70 % der Durchtrittsfläche (28) des Ringraums (16b) abdecken.

13. Peltonturbine nach einem der Ansprüche 1 bis 12, **dadurch gekennzeichnet, dass** die Laufradachse (30) horizontal angeordnet ist und dass beidseitig in einem Raum seitlich von der Symmetrie-Ebene (5) jeweils ein Bremsgitter (18) angeordnet ist.

14. Peltonturbine nach einem der Ansprüche 1 bis 12, **dadurch gekennzeichnet, dass** die Laufradachse (30) vertikal angeordnet ist und dass in einem Raum unterhalb der Symmetrie-Ebene (5) ein Bremsgitter (18) angebracht ist.

15. Peltonturbine nach Anspruch 14, **dadurch gekennzeichnet, dass** in Durchtrittsrichtung des Spritzwassers nach einer letzten Lage (21) von Balken (22) für den gleichen Querschnitt in einem Abstand größer 100 mm ein Lochblech (39) angebracht ist.

16. Peltonturbine nach Anspruch 15, **dadurch gekennzeichnet, dass** das Bremsgitter (18) den ganzen Gehäusequerschnitt zum Unterwasserkanal (8) hin abdeckt und dass unterhalb des Bremsgitters auf gleichem Querschnitt ein Lochblech (39) angeordnet ist.

17. Peltonturbine nach Anspruch 16, **dadurch gekennzeichnet, dass** das Bremsgitter (18) als Kreisring ausgeführt ist, der mittig durch eine Säule (45) abgestützt ist, welche von dem Unterwasserkanal (8) in das Gehäuse hineinragt.

18. Peltonturbine nach Anspruch 1 bis 7, **dadurch gekennzeichnet, dass** die Laufradachse (30) horizontal angeordnet ist und dass anschließend an den Ringraum (16) seitlich von den Doppelblechen (3) Leitbleche (32) angebracht sind, di ein umlaufender Richtung der Becher (3) vor einem Tangentenpunkt (29) des Freistrahls einer Düse (2) an den Freistrahldurchmesser "D1" angeordnet sind.

19. Peltonturbine nach einem der Ansprüche 1 bis 6, **dadurch gekennzeichnet, dass** der freie Ringraum (16) sich bis auf einen Abstand von 60 bis 80 % einer Becherbreite "b" von der Symmetrie-Ebene (5) weg erstreckt und sich anschließend verjüngt, wobei seitlich von den Bechern angebrachte Leitbleche (32) den Ringraum (16b) überbrücken und das Spritzwasser in einen Sammelkanal (35, 35a, 35b) umlenken.

20. Peltonturbine nach Anspruch 19, **dadurch gekennzeichnet, dass** mindestens zwei Leitbleche (32) jeder Düse (2) zugeordnet sind und in umlaufender Richtung gestaffelt vor dem Tangentenpunkt (29) der Düse an den Freistrahldurchmesser "D1" liegen.

21. Peltonturbine nach Anspruch 20, **dadurch gekennzeichnet, dass** das erste Leitblech in Umlaufrichtung mit seiner Eintrittskante einen kürzesten Abstand S2 zu den Bechern (3) aufweist, der 20 bis 30 % einer Becherbreite "b" entspricht, während die Eintrittskanten nachfolgender Leitbleche weiter zurück gesetzt sind.

22. Peltonturbine nach einem der Ansprüche 19 bis 21, **dadurch gekennzeichnet, dass** für eine horizontale Wellenanordnung die Leitbleche (32) einen Austrittswinkel γ zwischen 40 und 50° zur Symmetrie-Ebene (5) aufweisen und der Sammelkanal (35) sich in umlaufender Richtung in Form einer Wendel vergrößert, welche über einen höchsten Punkt P, der höher als der Laufradmittelpunkt (9) liegt, einen Überlauf in den Unterwasserkanal (8) aufweist.

23. Peltonturbine nach einem der Ansprüche 19 bis 21, **dadurch gekennzeichnet, dass** die Leitbleche für eine vertikale Wellenanordnung einen Austrittswinkel γ zwischen 40 und 50° zur Symmetrie-Ebene (5) aufweisen und jeweils pro Düse (2) in einen oberen Sammelkanal (35a) und in einen unteren Sammelkanal (35b) fördern, wobei der untere Sammelkanal (35b) über einen Umlenkbogen (43) erreicht wird und beide, Sammelkanäle tangential und schräg nach oben weg führen und über einen höchsten Punkt P1, P2 in einen Zulauf (44) des Unterwasserkanals (8) einen Überlauf haben.

24. Peltonturbine nach Anspruch 23, **dadurch gekennzeichnet, dass** im Bereich des Umlenkbogens (43) auf der Unterseite Querschlitze (50) angebracht sind, die schräg in Strömungsrichtung in den Umlenkbogen einmünden und über einen Ablaufkanal (49) mit einem Sammelbehälter verbunden sind, um rückgestautes Spritzwasser abzuführen.

25. Peltonturbine nach einem der Ansprüche 1 bis 24, **dadurch gekennzeichnet, dass** am Umfang 3 bis 6 Düsen (2) angebracht sind, um mit einer verbesserten Spritzwasserabfuhr für ein Laufrad (4) bei gleicher Radgröße auf eine zur Düsenzahl proportionale Leistung zu kommen.

26. Peltonturbine nach einem der Ansprüche 8 bis 12, **dadurch gekennzeichnet, dass** zu jedem Freistrahl (6) im Ringraum (16) ein Leitblech (33) angebracht ist, welches unter einem Anstellwinkel ϕ von 25 bis 35° auf einen Abstand S3 von einem Zehntel bis zu einem Zwanzigstel der Becherbreite b an die Becher herangeführt ist.

27. Peltonturbine nach Anspruch 25, **dadurch gekennzeichnet, dass** das Leitblech eine Schneidkante (34) zu den Bechern hin aufweist, welche radial verläuft und in der Umlaufrichtung um einen Winkel λ von 25 bis 45° von einer zum Freistrahl (6) senkrechten Radialen (31) versetzt ist.

## Claims

1. A Pelton turbine for powers of more than 100 kW having a water drainage system, wherein within a housing a rotor (4) has double buckets (3) with a bucket width "b" and with a bucket length "1", wherein nozzles (2), which are arranged in a plane of symmetry (5) of the circulating buckets, respectively spray a free jet (6) tangentially on a free jet diameter "D1" into the double buckets (3) and wherein spray water (7) emerging from the buckets (3) falls enclosed by housing walls (1a, 1b) into an underwater channel (8), wherein guide means are arranged within the housing (1), starting at the roots of the buckets (3) and over the full periphery of the rotor (4), which guide and deflect the spray water (7),
**characterised in that** an outer housing ring (11) having a completely peripheral, gable-roof-like, inwardly protruding projection (13) made from solid material is provided as further guide and deflection means within the housing (1), its peak (15) being disposed in the plane of symmetry (5) at a spacing "S1" of 5 % to 20 % of a bucket length "1" to the buckets (3) so that the spray water emerging out of the buckets is protected from wandering splashes. (7)

2. A Pelton turbine in accordance with claim 1, **characterized in that** the gable-roof-like outer housing ring (11) has apertures (14) tangential to the free jet diameter "D1" which covers the free jets (6) of the nozzles against spray water (7b), with the nozzles themselves not projecting inwardly into the outline of the roof-like projection (13) of solid material.

3. A Pelton turbine in accordance with claim 1 or claim 2, **characterized in that** the nozzles (2) close off the apertures (14) towards the outside in order to prevent the drawing in of air by the free jet (6).

4. A Pelton turbine in accordance with any one of the claims 1 to 3, **characterized in that** the apertures only have a slightly larger diameter than the free jet (6) so that the outer housing ring (11) only has small interruptions with respect to peripheral spray water (7) in the plane of symmetry (5) at the rook-like projection (13).

5. A Pelton turbine in accordance with any one of the claims 1 to 4, **characterized in that** the roof-like outer housing ring (11) forms an angle α between 55° and 80° with the plane of symmetry on both sides of the plane of symmetry (5) and at least one inner housing ring (12) forms an angle β between 55° and 80° with the plane of symmetry in order to provide a ring space (16) diverging in the axial direction.

6. A Pelton turbine in accordance with claim 5, **characterized in that** the angles α and β lie between 65° and 75°.

7. A Pelton turbine in accordance with an< one of the claims 1 to 6, **characterized in that** the ring space (16) is conical and is continued away from the plane of symmetry (5) by a cylindrical connection piece (16b) up to a spacing of 1.4 to 2 times the bucket width "b".

8. A Pelton turbine in accordance with any one of the claims 1 to 7, **characterized in that** a braking grid (18) arranged parallel to the plane of symmetry adjoins at least one ring space (16, 16b) and takes up a large part of the kinetic energy of the spray water (7) and reduces the foam formation on the path into the underwater channel (8).

9. A Pelton turbine in accordance with claim 8, **characterized in that** the braking grid has a first layer (20) of bars (22) arranged parallel to one another in a plane (19) at the same centre to centre spacing (25).

10. A Pelton turbine in accordance with claim 9, **characterized in that** the braking grid has at least one further layer (21) of equally aligned bars (22) which are offset by half a centre to centre spacing (25) of the bars relative to the bars (22) lying in front of them.

11. A Pelton turbine in accordance with one of the claims 9 or 10, **characterized in that in that** the bars (22) have a round cross-section or are made as pipes (23).

12. A Pelton turbine in accordance with any one of the claims 1 to 11, **characterized in that** the bars of one layer (20, 21) cover 60 % to 70 % of the passage area (28) of the ring space (16b).

13. A Pelton turbine in accordance with any one of the claims 1 to 12, **characterized in that** the rotor axis (30) is horizontally arranged; and **in that** a respective braking grid (18) is arranged on both sides in a space to the side of the plane of symmetry (5).

14. A Pelton turbine in accordance with one of the claims 1 to 12, **characterized in that** the rotor axis (30) is vertically arranged and **in that** a braking grid (18) is attached in a space beneath the plane of symmetry (5).

15. A Pelton turbine in accordance with claim 14, **characterized in that** a perforated metal plate (39) is attached in the passage direction of the spray water after a last layer (21) of bars (22) for the same cross-section at a spacing larger than 100 mm.

16. A Pelton turbine in accordance with claim 15, **characterized in that** the braking grid (18) covers the entire housing cross-section towards the underwater channel (8); and **in that** a perforated sheet metal plate (39) is arranged beneath the braking grid over the same cross-section.

17. A Pelton turbine in accordance with claim 16, **characterized in that** the braking grid (18) is made as a circular ring which is supported at the centre by a column (45) which projects from the underwater channel (8) into the housing.

18. A Pelton turbine in accordance with any one of claims 1 to 7, **characterized in that** the rotor axis (30) is horizontally arranged and **in that** sheet metal guides (32) are attached adjacent to the ring space (16) to the side of the double buckets (3) and are arranged in the peripheral direction of the buckets (3) in front of a tangent point (29) of the free jet of a nozzle (2) at the free jet diameter "D1".

19. A Pelton turbine in accordance with any one of the claims 1 to 6, **characterized in that** the free ring space (16) extends away from the plane of symmetry (5) up to a spacing of 60 to 80 % of a bucket width "b" and subsequently tapers, with the sheet metal guides (32) attached to the side of the buckets bridging the ring space (16b) and deflecting the spray water into a collection channel (35, 35a, 35b).

20. A Pelton turbine in accordance with claim 19, **characterized in that** at least two sheet metal guides (32) are associated with each nozzle (2) and are staggered in the peripheral direction in front of the tangent point (29) of the nozzle at the free jet diameter "D1".

21. A Pelton turbine in accordance with claim 20, **characterized in that** the entry edge of the first sheet metal guide in a peripheral direction has a shortest spacing S2 from the buckets (3) which corresponds to 20 to 30 % of a bucket width "b", while the entry edges of subsequent sheet metal guides are set back further.

22. A Pelton turbine in accordance with any one of the claims 19 to 21, **characterized in that**, for a horizontal shaft arrangement, the sheet metal guides (32) have an outlet angle γ between 40 and 50° to the plane of symmetry (5) and the collection channel (35) enlarges in the form of a spiral in the peripheral direction, said spiral having an overflow into the underwater channel (8) above a highest point P which is higher than the centre point (9) of the rotor

23. A Pelton turbine in accordance with any one of the claims 91 to 21, **characterized in that**, for a vertical shaft arrangement, the sheet metal guides have an outlet angle γ between 40 and 50° to the plane of symmetry (5) and each convey per nozzle (2) into an upper collecting channel (35a) and into a lower connecting channel (35b), with the lower collecting channel (35b) being reached via a deflection bend (43) and both collecting channels leading away tangentially and obliquely upwardly and having an overflow above a highest point P1, P2 into an inflow (44) of the underwater channel (8).

24. A Pelton turbine in accordance with claim 23, **characterized in that** transverse slots (50) are applied in the region of the deflection bend (43) at the lower side which open obliquely in the flow direction into the deflection bend and are connected to a collecting container via a drain channel (49) in order to lead away backed-up spray water.

25. A Pelton turbine in accordance with any one of the claims 1 to 24, **characterized in that** 3 to 6 nozzles (2) are attached at the periphery in order to achieve a power proportional to the number of jets with an improved spray water drainage for a rotor (4) with the same rotor size.

26. A Pelton turbine in accordance with any one of the claims 8 to 12, **characterized in that** a sheet metal guide (33) is attached in the ring space (16) for each free jet (6) and is led towards the buckets at an angle of attack ϕ of 25 to 35° to a distance S3 of a tenth to a twentieth of a bucket width b.

27. A Pelton turbine in accordance with claim 28, **characterized in that** the sheet metal guide has a cutting edge (34) towards the buckets which extends radially and is offset in the peripheral direction by an angle λ of 25 to 45° from a radial direction (31) perpendicular to the free jet (6).

## Revendications

1. Turbine de Pelton avec un système d'évacuation d'eau pour des puissances supérieures à 100 kW, dans laquelle une roue (4) comporte, à l'intérieur d'une bâche (1), des augets doubles (3) avec une largeur d'auget "b" et une longueur d'auget "1", et comprenant des injecteurs (2), agencés dans un plan de symétrie (5) des augets en rotation, qui injectent respectivement un jet libre (6) tangentiellement sur un diamètre de jet "D1" et l'eau injectée (7) tombe hors des augets (3) dans un canal d'eau inférieur (8) en étant confinée par des parois (1a, 1b) de la bâche, et à l'intérieur de la bâche (1) sont agencés des moyens de guidage, sous la forme d'une couronne de bâche intérieure (11), qui démarrent au niveau des racines des augets et s'étendent sur la totalité de la périphérie de la roue (4), et guident et dévient l'eau injectée (7), **caractérisée en ce qu'**il est prévu, à titre de moyens de guidage et de déviation supplémentaires à l'intérieur de la bâche (1), une couronne de bâche extérieure (11) avec une saillie (13) en matériau plein, sur la totalité de la périphérie et en dépassement vers l'intérieur sous forme d'un toit en "V", dont la pointe (15) est agencée dans le plan de symétrie (5) à une distance "S1" de 5 % à 20 % d'une longueur "1" vis-à-vis des augets (3), afin que l'eau injectée qui sort des augets soit protégée vis-à-vis des projections erratiques (7).

2. Turbine de Pelton selon la revendication 1, **caractérisée en ce que** la couronne de bâche extérieure (11) sous forme d'un toit en "V" présente des traversées (14), tangentiellement au diamètre "D1" du jet libre, lesquelles couvrent les jets libres (6) des injecteurs vis-à-vis de l'eau injectée (7b), et les injecteurs eux-mêmes pénètrent vers l'intérieur dans le contour de la saillie (13) en matériau plein en forme de toit.

3. Turbine de Pelton selon la revendication 1 ou 2, **caractérisée en ce que** les injecteurs (2) referment les traversées (14) vis-à-vis de l'extérieur, pour empêcher l'aspiration d'air par le jet libre (6).

4. Turbine de Pelton selon l'une des revendications 1 à 3, **caractérisée en ce que** les traversées (14) ont un diamètre seulement légèrement supérieur à celui du jet libre (6), afin que la couronne de bâche extérieure (11) présente, dans le plan de symétrie (5) sur la saillie (13) en forme de toit, uniquement des faibles interruptions vis-à-vis de l'eau injectée périphérique.

5. Turbine de Pelton selon l'une des revendications 1 à 4, **caractérisée en ce que**, des deux côtés du plan de symétrie (5), la couronne de bâche extérieure (11) en forme de toit définit avec le plan de symétrie un angle α entre 55° et 80°, et au moins une couronne de bâche intérieure (12) définit avec le plan de symétrie un angle β entre 55° et 80°, afin de réaliser un espace annulaire (16) qui s'ouvre en direction axiale.

6. Turbine de Pelton selon la revendication 5, **caractérisée en ce que** les angles α et β sont entre 65° et 75°.

7. Turbine de Pelton selon l'une des revendications 1 à 6, **caractérisée en ce que** l'espace annulaire (16) est conique, et est prolongé par une pièce de raccordement cylindrique (16b) qui s'éloigne du plan de symétrie (5) jusqu'à une distance de 1,4 à 2 fois la largeur d'auget "b".

8. Turbine de Pelton selon l'une des revendications 1 à 7, **caractérisée en ce qu'**au moins à un espace annulaire (16, 16b) se raccorde une grille de freinage (18) agencée parallèlement au plan de symétrie, qui absorbe de l'eau injectée (7) une majeure partie de son énergie cinétique, et qui réduit la formation de mousse sur le trajet vers le canal d'eau inférieur (8).

9. Turbine de Pelton selon la revendication 8, **caractérisée en ce que** la grille de freinage présente une première couche (20), dans un plan (19), de barreaux (22) agencés parallèlement les uns aux autres à la même distance moyenne (25).

10. Turbine de Pelton selon la revendication 9, **caractérisée en ce que** la grille de freinage présente, derrière la première couche (20), au moins une autre couche (21) de barreaux (22) avec la même orientation, décalés par rapport aux barreaux (22) situés en avant, de la moitié de la distance moyenne (25) des barreaux.

11. Turbine de Pelton selon l'une des revendications 9 ou 10, **caractérisée en ce que** les barreaux (22) présentent une section arrondie, ou sont réalisés sous forme de tubes (23).

12. Turbine de Pelton selon l'une des revendications 9 à 11, **caractérisée en ce que** les barreaux d'une couche (20, 21) couvrent 60 % à 70 % de la surface de traversée (28) de l'espace annulaire (16b).

13. Turbine de Pelton selon l'une des revendications 1 à 12, **caractérisée en ce que** l'axe de la roue (30) est agencé horizontalement, et **en ce qu'**une grille de freinage (18) respective est agencée des deux côtés dans un espace latéralement par rapport au plan de symétrie (5).

14. Turbine de Pelton selon l'une des revendications 1 à 12, **caractérisée en ce que** l'axe (30) de la roue est agencé verticalement, et **en ce qu'**une grille de freinage (18) est montée dans un espace au-dessous du plan de symétrie (5).

15. Turbine de Pelton selon la revendication 14, **caractérisée en ce que**, dans la direction de traversée de l'eau injectée, après une première couche (21) de barreaux (22) est montée une tôle à trous (39) pour la même section à une distance supérieure à 100 mm.

16. Turbine de Pelton selon la revendication 15, **caractérisée en ce que** la grille de freinage (18) recouvre la totalité de la section de la bâche vers le canal d'eau inférieur (8), et **en ce qu'**une tôle à trous (39) est agencée au-dessous de la grille de freinage sur la même section.

17. Turbine de Pelton selon la revendication 16, **caractérisée en ce que** la grille de freinage (18) est réalisée sous forme de bague circulaire, soutenue au milieu par une colonne (45) qui pénètre dans la bâche en venant du canal d'eau inférieur (8).

18. Turbine de Pelton selon l'une des revendications 1 à 7, **caractérisée en ce que** l'axe de la roue (30) est agencé horizontalement, et **en ce qu'**à la suite de l'espace annulaire (16) et latéralement par rapport aux augets doubles (3) sont agencées des tôles de guidage (32) qui, dans une direction périphérique des augets (3), sont agencés sur le diamètre "D1" du jet libre devant un point tangentiel (27) du jet libre d'un injecteur (2).

19. Turbine de Pelton selon l'une des revendications 1 à 6, **caractérisée en ce que** l'espace annulaire libre (16) s'étend en éloignement du plan de symétrie (5) jusqu'à une distance de 60 à 80 % d'une largeur d'auget (b), et va ensuite en se rétrécissant, et dans laquelle des tôles de guidage (32) montées latéralement par rapport aux augets comblent l'espace annulaire (16b) et dévient l'eau injectée jusque dans un canal de collecte (35, 35a, 35b).

20. Turbine de Pelton selon la revendication 19, **caractérisée en ce qu'**au moins deux tôles de guidage (32) sont associées à chaque injecteur (2) et sont disposées en direction périphérique de manière étagée devant le point tangentiel (29) de l'injecteur sur le diamètre "D1" du jet libre.

21. Turbine de Pelton selon la revendication 20, **caractérisée en ce que** la première tôle de guidage en direction périphérique présente avec son arête d'entrée la distance la plus courte "S2" par rapport aux augets (3), qui correspond de 20 à 30 % d'une largeur d'auget "b", alors que les arêtes d'entrée des tôles de guidage suivantes sont disposées plus loin en retrait.

22. Turbine de Pelton selon l'une des revendications 19 à 21, **caractérisée en ce que** pour un agencement horizontal de l'arbre, les tôles de guidage (32) présentent un angle de sortie γ entre 40 et 50° par rapport au plan de symétrie (5), et le canal de collecte (35) s'agrandit en direction périphérique sous la forme d'une volute qui, au-dessus d'un point P le plus haut, situé plus haut que le centre de la roue (9), présente un déversement vers le canal d'eau inférieur (8).

23. Turbine de Pelton selon l'une des revendications 19 à 21, **caractérisée en ce que** pour un agencement vertical de l'arbre, les tôles de guidage présentent un angle de sortie γ entre 40 et 50° par rapport au plan de symétrie (5) et mènent respectivement pour chaque injecteur (2) vers un canal de collecte supérieur (35a) et vers un canal de collecte inférieur (35b), de sorte que le canal de collecte inférieur (35b) est atteint via un coude de renvoi (43), et les deux canaux de collecte s'éloignent tangentiellement et en oblique vers le haut et présentent, au-dessus d'un point P1, P2 le plus haut, un déversement dans un adducteur (44) du canal d'eau inférieur (8).

24. Turbine de Pelton selon la revendication 23, **caractérisée en ce que**, dans la région du coude de renvoi (43) et sur la face inférieure sont ménagées des fentes transversales (50) qui débouchent en oblique dans le coude de renvoi dans la direction d'écoulement et sont reliées via un canal d'évacuation (49) à un réservoir de collecte afin d'évacuer l'eau injectée refoulée.

25. Turbine de Pelton selon l'une des revendications 1 à 24, **caractérisée en ce que** sur la périphérie sont agencés 3 à 6 injecteurs (2), afin de parvenir, grâce à une meilleure évacuation de l'eau injectée pour une roue (4) et pour une même taille de roue, à une puissance proportionnelle au nombre d'injecteurs.

26. Turbine de Pelton selon l'une des revendications 8 à 12, **caractérisée en ce que** pour chaque jet libre (6) une tôle de guidage (33) est montée dans l'espace annulaire (16), laquelle se rapproche des augets sous un angle d'attaque ϕ de 25 à 35° et jusqu'à une distance S3 qui va d'un dixième à un vingtième de la largeur d'auget b.

27. Turbine de Pelton selon la revendication 25, **caractérisée en ce que** la tôle de guidage présente une arête vive (34) vers les augets, laquelle s'étend radialement et est décalée en direction périphérique d'un angle λ de 25 à 45° par rapport à une radiale (31) perpendiculaire au jet libre (6)^{.}
